# EUROPEAN PATENT SPECIFICATION

(11) **EP 4 337 374 B1**
(45) Date of publication and mention of the grant of the patent: **09.04.2025**
(21) Application number: 22726959.4
(22) Date of filing: 12.05.2022
(51) Int. Cl.: B01D 71/32, C08F 8/12, C08F 226/02

(54) **FLUORINATED COPOLYMERS HAVING NITROGEN FUNCTIONALITY AND USES THEREOF**
FLUORIERTE COPOLYMERE MIT STICKSTOFFFUNKTIONALITÄT UND VERWENDUNGEN DAVON
COPOLYMÈRES FLUORÉS AYANT UNE FONCTIONNALITÉ AZOTE ET LEURS UTILISATIONS

(30) Priority: 14.05.2021 US 202163188592 P
(43) Date of publication of application: 20.03.2024
(73) Proprietor: COMPACT MEMBRANE SYSTEMS INC., Newport, DE 19804 (US)
(72) Inventor: SHANGGUAN, Ning, Cherry Hill, New Jersey 08003 (US); LOUSENBERG, Robert, D., WIlmington, Delaware 19810 (US)
(74) Representative: Hoffmann Eitle
(86) International application number: PCT/US2022/028905
(87) International publication number: WO 2022/241069

(56) References cited:
- WO-A1-2010/080753
- WO-A1-2016/201222
- US-A1- 2020 270 439

## Description

### CROSS REFERENCE TO RELATED APPLICATIONS

### BACKGROUND

Energy production from processes such as power plants, which burn natural gas, coal or other hydrocarbon-based fuels, or methane generation from biological degradation of waste organic materials, such as manure, produce gaseous effluents comprissing carbon dioxide (CO₂). In power plants, the effluent (flue gas) contains CO₂ at approximately 12-15% v/v, nitrogen (N₂), and water vapor from the combustion of air. Mixtures of CO₂ and methane from biological degradation also contain hydrogen sulfide, and water vapor. It can be desirable to recover methane for its energy content while CO₂ is known to contribute to global warming. Therefore, it can aslo be desirable, especially in power generation, to recover the CO₂ and reduce emissions to the environment. Carbon dioxide capture and sequestration (CCS) has been proposed for separation and subsequent injection of CO₂ into underground storage sites. The overall CCS process needs to be highly efficient to minimize costs associated with compression since CO₂-containing effluents are usually at low concentrations (∼10 to 40%) and low partial pressures (∼5 to 30 psia) and may be close to atmospheric pressure, making separation economically challenging. Processes for CCS have included amine scrubbing, wherein CO₂ reversibly reacts with a liquid amine to form an ammonium-CO₂ complex, and membrane separation.

Enhanced membrane CO₂ separation through a facilitated transport mechanism using a membrane incorporating amine functionality was known. For example. Deng et al. in U.S. Patent No. 7,896,948 disclosed a method for separating carbon dioxide from a gas mixture using a thin-film membrane having a gas-separation layer incorporating a blend of polyvinyl alcohol and polyvinylamine. Ho et al. in U.S. Patent No. 10,835,847 disclosed a method of separating a gaseous mixture comprising carbon dioxide using a membrane incorporating a selective polymer layer comprising an amine-containing polymer, such as polyvinylamine, and an amino acid salt dispersed within the amine-containing polymer. Polyvinylamine is a stable glassy polymer when dry and has glass transition temperature between 120 and 130°C. However, these membrane materials are water-soluble and without a stabilization strategy, they can be highly plasticized due to swelling such that they might be easily damaged from process upsets because of the significant water vapor pressure that is required for CO₂ separation performance. WO2016/201222A1 and WO2010/080753A1 disclose fluorinated copolymers and gas separation membranes.

### SUMMARY

This invention, as defined in the appending claims, discloses a fluorinated copolymer having nitrogen functionality in the form of pendant amide functionality, a membrane incorporating certain amine derivatized compositions of the fluorinated copolymer, and processes using the membrane for the separation of carbon dioxide from gas mixtures with nitrogen or methane. The fluorinated copolymer comprises a first repeating unit, a second repeating unit, and has a backbone comprising a fluorinated and cyclic structure from the first repeating unit. The second repeating unit comprises a pendant amide functionality and has the following structure: 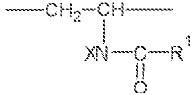 wherein X is H or an alkyl group; R¹ is H, an alkyl group, or an alkyl group that together with X from a cyclic ring with the proviso that X is not H.

In an aspect disclosed herein, free-radical copolymerization of a fluoromonomer that is cyclic, such as 4,5-Difluoro-2,2-bis(trifluoromethyl)-1,3-dioxole (PDD), or is otherwise cyclizable during free-radical copolymerization, is used to from the first repeting unit having a fluorinated and cyclic structure within the backbone of the fluorinated copolymer. Copolymerization iwth a vinyl amide comonomer, such as N-vinyl formamide or N-methyl-N-vinyl acetamide, results in the second repeating unit having a pendant amide functionality. Derivatization of the nitrogen functionality in the fluorinated copolymer through a hydrolysis recaction can be used to transform pendant amide functionality to pendant amine functionality and form an amine derivatized fluorinated copolymer. In another aspect disclosed herein, the amine derivatized fluorinated copolymer having a fraction. preferably greater than 50% of the pendant amide functionality transformed to pendant amine functionality, is useful for a membrane, and is particularly useful as a gas-separation layer in a thin-film composite membrane. In yet another aspect disclosed herein, the membrane is useful for separation of carbon dioxide (CO₂) from nitrogen or methane.

The fluorinated copolymer having a fluorinated and cyclic structure within the backbone from the first repeating unit can have a high glass transition temperature above 130°C. The fluorinated and cyclic structure helps to reduce water solubility and may also help to increase CO₂ permeability for the fluorinated copolymer in a membrane or gas-separation layer in a thin-film composite membrane. The amine functionality in the amine derivatized fluorinated copolymer may help to increase CO₂ selectivity over gases such as nitrogen (N₂) or methane (CH₄) through a facilitated transport mechanism. A thin-film composite membrane, having a thickness for the gas-separation layer that is between 0.1 and 0.5-µm, may have a CO₂ to nitrogen or membrane selectivity of at least 20. The corresponding CO₂ permeance may be at least 500 × (10⁻⁶ × cm³ (STP)/cm²/sec/cmHg) (500 gas permeation units or 500-GPU or 1675 × 10⁻¹⁰ mol m⁻² s⁻¹ Pa⁻¹ in SI units), and preferably at least 1000-GPU at ambient (20 to 25°C) temperatures. This separation performance may be realised at operating conditions that include feed pressure that are 90-psig or lower, and/or CO₂ partial pressures that are 40% or less of total feed presure.

### BRIEF DESCRIPTION OF THE DRAWING

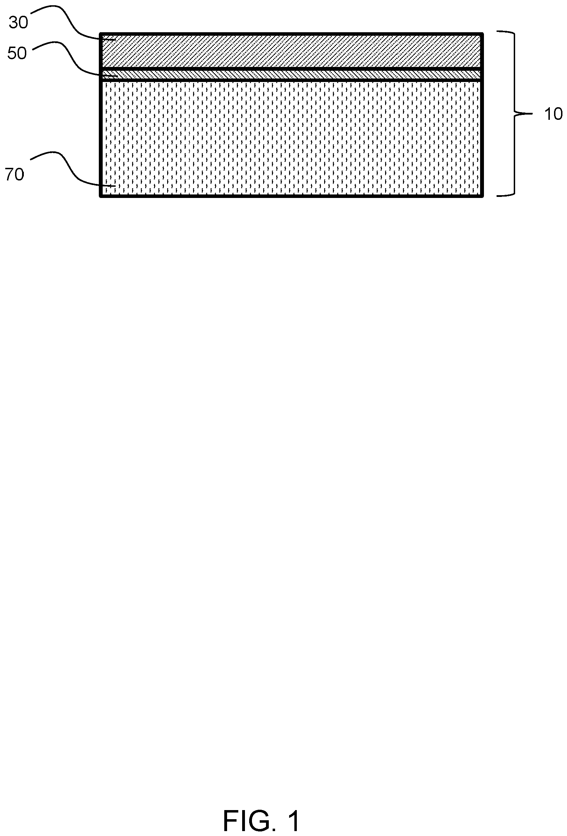

Figure 1 shows a cross-sectional view of an exemplary thin-film composite membrane (10) comprising a gas-separation layer (30), a high-diffusion-rate layer (50), and a porous-layer support (70). The respective layer thicknesses are not necessarily to scale. However, the layer surfaces are in intimate contact to each other. This may also be referred to as laminated or bonded together in the field of membrane technology although usually no separate adhesive is employed.

### DETAILED DESCRIPTION

A membrane for industrial CO₂/N₂ (or CO₂/methane) separation should be highly permeable to CO₂ and preferably possess a selectivity over nitrogen (or methane) of at least 20, more preferably greater than 30. Polymer materials for a necessarily thin gas-separation layer in a thin-film composite membrane should be mechanically and thermally stable, and easy to fabricate into large-area composite membrane modules. The gas-separation layer should have a long working lifetime with resistence to degradation from the effects of water vapor or adventitious contact with liquid water. Gas-separation layers from certain polymer materials that incorporate a flourinated and cyclic repeating unit structure within the polymer backbone can have high permeance, reduced water solubility, and high glass-transition temperatures. Gas-separation layers from polymer materials that also incorporate amine functionality may have increased CO₂ to N₂ (or CO₂ to methane) selectivity through a facilitated transport mechanism and are desirable for industrial-scale separations.

In an aspect of the invention, a fluorinated copolymer is prepared by copolymerization of a fluoromonomer to form a first repeating unit and a vinyl amide comonomer to form a second repeating unit. The fluoromonomer that forms the first repeating unit may be cyclic or is otherwise cyclizable from free-radical copolymerization and becomes the first repeating unit that is fluorinated and cyclic within the copolymer backbone structure. Fluoromonomers that are cyclic include 4,5-Difluoro-2,2-bis(trifluoromethyl)-1,3-dioxole (PDD), 2,2,4-trifluoro-5-trifluoromethoxy-1,3-dioxole (TFMD), perfluoro(2-methylene-4-methyl-1,3-dioxolane) (PFMMD), and perfluoro(2-methylene-1,3-dioxolane) (PFMD). Fluoromonomers that are cyclizable from free radical copolymerization include perfluoro(4-vinyloxyl-1-butene) (PVOB). PDD is relatively more reactive to free-radical copolymerization, commercially available, and is preferred fluoromonomer. Vinyl amide comonomers to form the second repeating unit include N-vinyl formamide, N-vinyl acetamide, *N*-methyl-*N-*vinyl acetamide, 1-vinyl-2-pyrrolidinone, or *N*-vinyl caprolactam may be used to form a second repeating unit. N-vinyl formamide and N-methyl-N-vinyl acetamide are liquid at ambient room temperature, readily commercially available, have relatively simple structures, and are therefore preferred.

The fluorinated copolymers are synthesized by free-radical copolymerization using known polymerization techniques, which can include emulsion copolymerization, solution copolymerization, and precipitation copolymerization. In a precipitation copolymerization, a solvent for the fluorinated monomer, vinyl amide comonomer, and initiator may not be solvent for the fluorinated copolymer that is formed in the copolymerization reaction mixture. Solution or precipitation copolymerization with use of a solvent us preferred for a small-scale (<1-L volume) copolymerization process. The free-radical copolymerization may be conducted in batch, semi-batch or continous copolymerization processes. A preferred solvent for the copolymerization should not significantly contribute to chain transfer reactions during copolymerization. Preferred solvents or solvent mixtures have included mixtures of methyl acetate and *tert*-butanol.

The free-radical copolymerization is conducted in the absence of oxygen in a copolymerization vessel that is configured for the containement and mixing of a copolymerization reaction mixture. The copolymerization vessel is preferably a pressure vessel to minimize loss of volatile or gaseous components and is constructed of any suitable material, preferably glass or metal. The copolymerization vessel is preferably a pressure vessel to minimize loss of volatile or gaseous components and is constructed of any suitable material, preferably glass or metal. The copolymerization vessel is preferably configured with ports, valves, or pumps for the addition of the fluoromonomer, vinyl amide monomer, solvent, and free-radical initiator. The copolymerization vessel may also be configured with additional equipment such as for heating, or a chiller for cooling and removal of copolymerization reaction mixture. The copolymerization reaction temperature is generally in the range of 0°C to 80°C, more preferably in the range of 50°C to 70°C. Azo-like initiators are preferred initiators for the free-radical copolymerization. 2,2'-Azobisisobutyronitrile (AIBN) is especially preferred. The free radical initiator may be pre-dissolved with all or a part of the solvent to form an initiator solution and is added at the beginning of the copolymerization. Additional initiator solution may be added to the copolymerization reaction mixture throughout the copolymerization reaction time to maintain a consistent initiator concentration. A practical copolymerizaton reaction time for a batch copolymerization is at least 1 hour, preferably between 1 to 24 hours, and more preferably between 8 and 16 hours when using a rpeferred PDD fluoromonomer and N-vinyl formamides as the vintl amide monomer.

The copolymerization reaction mixture is subsequently removed from the copolymerization vessel and separated to isolate the fluorinated copolymer, and optionally recover the remaining fluoronomer, remaining vinyl amide monomer, and solvent. The fluorinated copolymer may be isolated from the copolymerization reaction mixture using techniques that include precipitation, flash evaporation, or spray drying. Alternatively, a fluorinated copolymer that is insoluble in the copolymerization reaction mixture and already precipitated may be isolated by filtration and further purified by washing with the solvent. The composition of the fluorinated copolymers can have a wide range with molar rations of a first repeating unit to sencond repeating unit that are between 1:1 and 1:99. Preferably, the molar ratio of a first repeating unit to a second repeating unit is between 1:1 and 1:9, more preferably between 1:2 and 1:9. The fluorinated copolymers may comprise an additional repeating unis that is different from the fisrt and second repeating units and may be incorporated to increase molecular weight or further modify copolymer properties. The additional repeating unit may be formed from cromonomers that include tetrafluoroethylene, chlorotrifluoroethylene, vinylidene fluoride, vinyl fluoride, perfluoropropylvinyl ether, and ethylene. The additional repeating unit is preferably less than 50 mole percent, more preferably less than 25 mole precent with respect to the average repeating unit composition of the fluorinated copolymer.

Preferred fluorinated copolymer compositions having a backbone comprising a fluorinated and cyclic structure from a fist repeating unit, and a second repeating unit with pendant amide functionality from a vinyl amide comonomer are shown in scheme (I). wherein n and m are fractional numbers that define the average repeating unit composition. Preferred vinyl amide comonomers include N-vinyl formamide (R¹ =H, R² = H) or N-vinyl-N-methyl acetamide (R¹ = CH₃, R² = CH₃). The fluorinated copolymer comprising a first repeating unit from PDD and a second repeating unit from N-vinyl formamide, poly(PDD-*co*-N-Vinyl formamide), is formed in relatively high yields, is relatively easy to hydrolyze, and is most preferred.

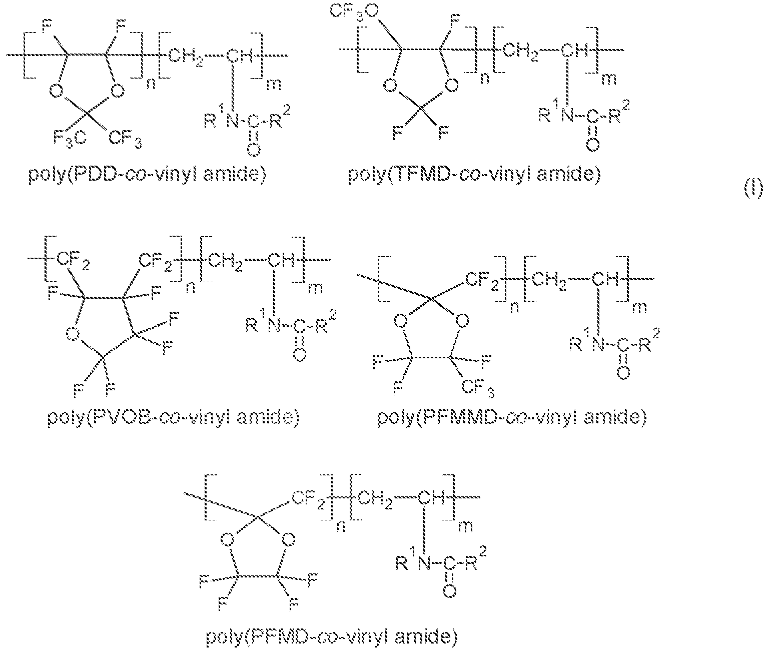

A fraction between 1 and 100%, preferably greater than 50% of the pendant amide functionality from the second repeating unit of the fluorinated copolymer, may be transformed to pendant ammonium or pendant amine functionality by either acid or base hydrolysis methods, respectively, to form the amine derivatized fluorinated copolymer. Base hydrolysis using sodium hydroxide or potassium hydroxide (KOH) is preferred and avoids a subsequent ion exchange step to convert ammonium functionality to amine functionality. Base hydrolysis is carried out with the fluorinated copolymer dispersed or dissolved in a liquid medium such as lower alcohols (ROH) that include methanol, ethanol, or mixtures of these alcohols with water. Base hydrolysis in methanol using potassium hydroxide (KOH) is exemplified in scheme (II) wherein the first repeating unit is from PDD, and the second repeating unit is from N-vinyl amide. The fluorinated copolymer swells or dissolves in the alcohol as it slowly hydrolyzes and may be accelerated with heating of the reaction mixture. The amine derivatized fluorinated copolymer may then be separated from the reaction mixture by evaporation or precipitation in water. The amine derivatized fluorinated copolymer can be subsequently re-dissolved in the same alcohol or a different solvent for fabrication of a gas-separation layer in a thin-film composite membrane by solution casting.

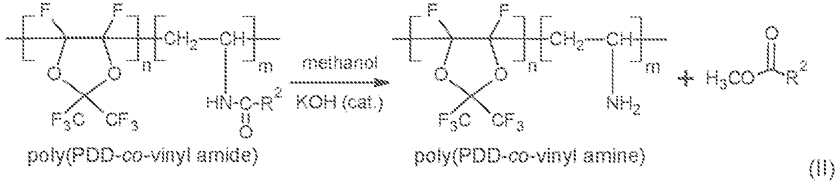

A dilute solution of the amine derivatized fluorinated copolymer after hydrolysis is prepared for membrane fabrication at concentrations that are preferably less than 5%, more preferably less than 2%, and very preferably between 0.1% and 1%. Suitable solvents or solvent mixtures are those that will dissolve the amine derivatized fluorinated copolymer and evaporate at an appropriate rate to form the membrane in a timely manner. For example, suitable solvents include but are not limited to lower alcohols such as methanol and ethanol, mixtures of the preceding solvents with each other, water, or mixtures of the alcohols with fluorinated solvents that are organic-soluble, such as Novec^{®} HFE7200 and HFE7300 (3M, St. Paul, MN) may also be used. Solvent mixtures with a fluorinated solvent may help to increase solubility for derivatized fluorinated copolymers having a relatively high mole fraction of the first repeating unit.

Solution casting is the preferred technique to form the membrane, preferably as a gas-separation layer in a thin-film composite membrane. Solution casting techniques include but are not limited to ring casting, dip-coating, spin-coating, slot-die coating, and Mayer rod coating. The solution is cast, and the solvent(s) are evaporated to form the "dry" gas-separation layer. The gas-separation layer thickness has a significant influence on the permeance of the thin-film composite membrane. The gas-separation layer is therefore thin and preferably has a thickness of 0.05-µm to 1.0-µm, more preferably 0.1-µm to 0.5-µm. A gas-separation layer in a thin-film composite membrane construction is exemplified in Figure 1.

The membrane may be fabricated by solution casting a gas-separation layer directly onto a substrate that includes a high-diffusion rate layer, which is also known as a gutter layer in the field of membrane technology. The gutter layer helps to facilitate formation of a gas-separation layer that is thin and predominantly laminar by preventing the casting solution from significantly penetrating other layers of the thin-film composite membrane such as a porous-layer support. A gutter layer is known in the filed of membrane technology to increase overall permeance of a thin-film composite membrane, possibly by increasing permeation pathways from the gas-separation layer to the pores of the porous-layer support. The gutter layer is also very thin and preferably about 0.01-µm, to about and more preferably 0.1-µm to 1-µm. Permeance, which is pressure normalized flux, is typically reported in gas permeance units or GPU, and has units of 3.35 x 10⁻¹⁰ mol m⁻² s⁻¹ Pa⁻¹ (10⁶ x cm³ (STP)/cm²/sec/cm/Hg). The gutter layer preferably has a carbon dioxide permeance of at least 5000-GPU at 25°C, more preferably at least 10,000 GPU, and most preferably at least 10 times greater than the gas-separation layer.

Permeable materials for a gutter layer should be thermally and chemically stable, and highly permeable to CO₂ but not necessarily selective over other gases such as nitrogen and methane. The permeable material is preferably a glassy polymer with a glass transition temperature higher than the working temperature of the thin-film composite membrane. Dilute solutions of the permeable material for a gutter layer are prepared at concentrations that are preferably less than 1%, and more preferably between 0.05% and 0.5%. The gutter layer may be fabricated by the same solution casting techniques mentioned previously onto a substrate that includes the porous-layer support. Residual or trace solvent remaining in the gutter layer should not interfere with subsequent processing steps. A preffered permeable material for the gutter layer includes Teflon^{®} AF 2400 (The Chemours Co., Wilmington, DE), which is soluble in Novec^{®} HFE7300 (3M, St. Paul, MN), Novec^{®} FC770 (3M, St. Paul, MN), and Opteon^{®} SF10 (The Chemours Co., Wilmington, DE). Another preffered permeable material for the gutter layer is poly(5-trimethylsilyl propyne) (PTMSP). PTMSP is comercially available for Gelest (Morrisville, PA) and is soluble in toluene and heptane

The porous-layer support reinforces and helps to strengthen the composite membrane such that the thin-film composite membrane may be fabricated into complex geometries that include spiral-would or hallow-fiber membrane modules. The prous-layer support may be in the form of a flat sheet, hollow fiber, or tube. Suitable materials for a porous-layer support include but are not limited to polyvinylidine fluoride (PVDF), expanded polytetrafuloroethylene, polyacrylonitrile (PAN), polysulfone, and polyethersulfone. The porous-layer support may also comprise and even stronger backing material such as porous and non-woven polyester or polypropylene. Porous inorganic substates such as silica or alumina may also be suitable materials for the porous-layer support. The porous-layer support should have a CO₂ permeance that is greater than the gutter layer, preferably at least 2 times greater, and more preferably at least 5 times greater. Permeate gases should flow relatively unobstructed throught the usually much thicker, porous-layer support having a preferred porosity that is at least 40%. The average pore size is preferably less 0.10-µm and more preferably between 0.01 and 0.03-µm, corresponding to molecular weight cut-offs of aproximately 100,000 to 200,000 Daltons.

The thin-film composite membrane may be subjected to a thermal treatment step "annealed" to improve mechanical durability and long-term permeance and selectivity. The fluorinated copolymer in the gas-separation layer is annealed by heating the thin-film composite membrane to near or above the glass transition temperature of the fluorinated copolymer. The exact glass transition temperature will be dependent on the composition of the fluorinated copolymer. Generally, annealing temperatures for the preferred fluorinated copolymers are between 50 and 200°C, and preferably between 75 and 150°C. The thin-film composite membrane is preferably heated from 0.1 to 10 minutes, more preferably for 1 to 5 minutes. The appropiate annealing temperature and time shoull not degrade the other layers of the thin-film composite membrane.

The thin-film composite membrane having a gas-separation layer comprising the fulorinated copolymer that has been hydrolyzed is useful for the separation of CO₂ from nitrogen or methane. In a separation process, the membrane is exposed to a flowing gaseous feed-mixture comprising CO₂ and water vapor. A "driving force" is provided in which the carbon dioxide pressure on the feed-side is higher than on the permeate-side of the thin-film compsite membrane. The driving force may be generated by applying a vaccum on the permeate-side and may be preferred, due to lower energy consumption, for separation of CO₂ from low-pressure feed sources such as flue gas. Separation of carbon dioxide from the gaseous feed-mixture occurs through the membrane producing a permeate composition at the membrane premeate-side habing a higher concentration of CO₂ than the feed-mixture. Separation efficiency may be enchanced by habing water vapor in the feed mixture and optionally in a sweep comprising water vapor at the permeate-side. The sweep also function to increase the driving force by reducing the CO₂ concentration.

### EXAMPLES

### Example 1

Copolymerization of PDD and N-vinyl formamide at a 1:3 molar feed ration: A 125-mL glass pressure tube equipped with a Teflon^{®} screw cap and a magentic stir bar was immersed into an ice bath. The pressure tube was flushed with argon and then loaded with 30 mL of methyl acetate, 30 mL of *tert*-butyl alcohol, 129 mg (073 mmol) AlBN (2,2'-Azobis(2-methylpropionitrile), 8.52g (120 mmol) of previously vaccum distilled N-vinyl formamide and 9.76g (40.0 mmol) of PDD (4.5-Difluoro-2,2-bis(trifluoromethyl)-1,3-dioxole). The pressure tube was sealed, and the reaction mixture was heated with magnetic stirring to 60-64 °C by immersing in an oil bath. The reaction mixture was stirred at temperature overnight. After cooling to ambient room temperature, the crude product as a precipitate in the reaction mixture was isolated on filter paper using Bunchner funnel. The precipitate was rinsed on the filter paper with 30 mL of fresh 1:1 mixture of methyl acetate and *tert*-butyl alcohol. The precipitate on the filter paper was dried in an oven at 60 °C for 5 hours to yeld 14.0g (77%) of white powder. The glass transition temperature form DSC was 172 °C. From elemental analysis: C 40.06%, H 4.72%, N 10.84%. The calculated PDD/N-vinyl formamide molar ratio from the % nitrogen in the copolymer was 1:4.2.

### Example 2

Copolymerrization of PDD and N-Vinyl formamide at a 1:1 molar feed ratio: A 125-mL glass pressure tube equipped with a Teflon^{®} screw cap and a magnetic stir bar was immersed into an ice bath. The pressure tube was flushed with argon and then loaded with 9 mL of methyl acetate, 9 mL of *tert*-butyl alcohol, 50 mg (0.30 mmol) AlBN (2,2'-Azobis(2-methylpropionitrile), 1.16 g (16 mmol) of previously vacuum distilled N-vinyl formamide and 4.0 g (16 mmol) of PDD (2,2-bistrifluoromethyl-4,5-difluoro-1,3-dioxole). The pressure tube was sealed, and the reaction mixture was heated with magnetic stirring to 60-65 °C by immersing in an oil bath. The reaction mixture was stirred at temperature overnight. After cooling to ambient room temperature, the reaction mixture was filtered on filter paper with a Buchner funnel. The precipitate was rinsed on the filter paper with 10 mL of fresh 1:1 mixture of methyl acetate and *tert*-butyl alcohol. The precipitate on the filter paper was dried in an oven at 60 °C for 5 hours to yield 2.3 g (45%) of an off-white powder. From elemental analysis: C 36.1%, H 3.22%, N 7.25%. The calculated PDD/N-vinyl formamide molar ratio from the % nitrogen in the copolymer was 1:2.0.

### Example 3

Copolymerization of PDD and N-methyl-N-vinyl acetamide at a 1:3 molar feed ratio: A stainless-steel pressure vessel of a 125-mL stainless-steel pressure reactor, equipped with magnetic-mechanical stirring, was loaded with 123 mg (0.75 mmol) AIBN (2,2'-Azobis(2-methylpropionitrile). The pressure vessel was connected to the reactor head, evacuated, and chilled in an ice water bath. A mixture of 30 mL of methyl acetate and 30 mL of *tert*-butyl alcohol was added by transfer line into the pressure reactor followed by 11.2 g (113 mmol) of previously vacuum distilled N-methyl-N-vinyl acetamide. The pressure reactor was briefly re-evacuated with stirring to remove oxygen and then backfilled to atmospheric pressure with argon. 5.4-mL (∼9.2-g (38 mmol) of PDD (2,2-bistrifluoromethyl-4,5-difluoro-1,3-dioxole) was added by syringe through the transfer line and the pressure reactor was closed and heated to 60-65 °C. The maximum pressure was 35psia and the reaction mixture was stirred at temperature overnight at which point the pressure had dropped to 15 psia. After cooling to ambient room temperature and equilibrating any residual pressure/vacuum, the pressure reactor was opened and the crude product as a viscous slightly yellow solution was poured into a 250-mL tared wide-mouth jar. The viscous solution was carefully evaporated in a vacuum oven (60°C) to constant weight to yield an off-white glassy solid polymer (yield = 16.0-g, 78%). From elemental analysis: C 43.7%, H 5.93%, N 5.95%, F 14.4%. The calculated PDD/N-Methyl-N-vinyl acetamide molar ratio from the % nitrogen in the copolymer was 1:2.8.

### Example 4

Copolymerization of PDD and 1-vinyl-2-pyrrolidinone at a 1:3 molar feed ratio: A 125-mL stainless-steel pressure reactor equipped with magnetic-mechanical stirring is chilled in an ice bath. The pressure reactor is evacuated, backfilled with argon, then loaded with 120-mg (0.73 mmol) AIBN (2,2'-Azobis(2-methylpropionitrile) that is pre-dissolved in a mixture of 30 mL of methyl acetate and 30 mL of *tert*-butyl alcohol. 12.4 g (112 mmol) of previously vacuum distilled 1-vinyl-2-pyrrolidinone is added and the pressure reactor is briefly re-evacuated to remove oxygen and then backfilled with argon to atmospheric pressure 9.0-g (37 mmol) of PDD is added and the pressure reactor is closed and heated to 60-65 °C. The reaction mixture is stirred at temperature overnight. After cooling to ambient room temperature and equilibrating any residual pressure/vaccum, the pressure reactor is opened and the crude product as a viscous slightly yellow solution is poured into a 250-mL tared wide-mouth jar. The viscous solution is carefully evaporated in a vacuum oven (60°C) to constant weight to yield an off-white glassy solid polymer. The expected yield is greater than 50%. The expected PDD/1-vinyl-2-pyrrolidinone molar ration from elemental analysis and the % nitrogen in the copolymer is approximately 1:4.

### Example 5

Copolymerization of perfluoro(4-vinyloxyl-1-butene) (PVOB) and N-vinyl formamide at a 1:3 molar feed ration: PVOB may be prepared as outlined in U.S. Patent No. 4,897,457. A 125-mL stainless-steel pressure reactor equipped with magnetic-mechanical stirring is chilled in an ice bath. The pressure reactor is evacuated, backfilled with argon, then loaded with 120-mg (0.73 mmol) AIBN (2,2'-Azobis(2-methylpropionitrile) that is pre-dissolved in a mixture of 30 mL of methyl acetate and 30 mL of *tert*-butyl alcohol. 8.5 g (112 mmol) of previously vaccum distilled N-vinyl formamide is added and the pressure reactor is briefly re-evacuated to remove oxygen and then backfilled with argon to atmospheric pressure 10.4-g (37 mmol) of PVOB is added and the pressure reactor is closed and heated to 60-65 °C. The reaction mixture is stirred at temperature overnight. After cooling to ambient room temperature and venting any residual pressure, the crude product as a precipitate in the reaction mixture is poured from the pressure reactor and isolated on filter paper using a Buchner funnel. The precipitate is rinsed on the filter paper with 30 mL of fresh 1:1 mixture of methyl acetate and *tert*-butyl alcohol. The precipitate on the filter paper is dried in a vacuum oven at 60 °C to constant weight, yielding a white glassy polymer. The expected PVOB/N-vinyl formamide molar ratio from elemental analysis and the % nitrogen in the copolymer is approximately 1:5.

### Example 6

Fluorinated copolymer hydrolysis: 4.0 g of copolymer from example 1, 2.0 g potassium hydroxide, 50 mL methanol, and 5 mL of deionized water were added to a round bottom flask equipped with magnetic stirring and a reflux condenser. The hydrolysis mixture was heated to reflux with stirring for 2 hours and then cooled to ambient room temperature 50 mL of water was added to the flask, the reaction mixture was heated without the condenser to 80°C to evaporate most of the methanol and precipitate the now hydrolyzed and amine derivatized fluorinated copolymer. The precipitate was filtered on filter paper with a Buchner funnel, washed with 50 mL of deionized water and isolated as a tan solid (3.4 g) after drying at 60°C for 5 hours. The fraction of amide groups that were hydrolyzed is estimated at between 60 and 80% from titration of a dilute solution of the amine derivatized fluorinated copolymer with hydrochioric acid.

### Example 7

Thin-film composite mambrane from fabrication of a gas-separation layer on a Teflon^{®} AF 2400/polyacrylonitrile substrate; A substrate consisting of a gutter layer and a porous-layer support was first prepared by casting a 0.1% (w/w) solution of Teflon^{®} AF 2400 in Novec^{®} FC770 on a polyacrylonitrile (PAN) ultra-filtration membrane (SEPRO PAN 350), having an approximately 150,000 Dalton molecular weight cut-off. After drying, the CO₂ permeance of the Teflon^{®} AF2400 gutter layer/PAN composite was greater than 10,000-GPU. A 0.2% (w/w) solution of the hydrolyzed and derivatized fluorinated copolymer of example 6 was prepared in methanol and syringe filtered through 1-µm glass microfiber. The surface of a 3" diameter circle of the gutter layer/PAN composite in a ring holder was covered with the solution. The holder was silghtly tilted, and the excess solution was pipatted away. The reamaining wet film was then dried in a horizontal position at ambient room temperature under a dry nitrogen atmosphere to from the gas-separation layer. A protective layer from a 0.1% (w/w) solution of Teflon^{®} AF 2400 in Novec^{®} FC770 was subsequently ring cast on top of the separation layer in a similar manner.

### Example 8

Thin-film composite membrane from fabricantion of a gas-separation layer on a poly(trimethylsilyl propyne)/polybinylide fluroide substrate: A substrate consisting of a gutter layer and a porous-layer support was first prepared by castig a 1% (w/w) solution of poly(trimethylsilyl propyle) (PTMSP) in heptane on a polyvinylidine fluoride (PVDF) ultra-filtration membrane (Synder Filtration, Vacaville CA), having a 100,000 Dalton melcular weight cut-off. The CO₂ permeance of the PTMSP gutter layer/PVDF composite was greater that 10,000-GPU. A 3" diameter circle of the gutter layer/PVDF composite was placed in a ring holder and the surface was covered with the 0.2% (w/w) solution of the hydrolyzed and derivatized fluorinated copolymer that was prepared in example 7. The holder was slightly titlted, and the excess solution was pipetted away. The remaining wet film was then dried in a horizontal position at ambient room temperature under a dry nitrogen atmosphere to from the gas-separation layer. A protectivelayer from a 0.1% (w/w) solution of Teflon^{®} AF 240 in Novec^{®} FC770 was subsequently ring cast on top of the separation layer in a similar manner.

### Example 9

Mixed-gas permeance and selectivity testing of CO₂ over nitrogen or methane: Membranes (47-mm diameter circles, 16.85 cm² active area) were tested for CO₂ permeance and selectivity in a stainless-steel crossflow cell at ambient room temperature. CO₂, nitrogen, or methane was fed from separate gas cylinders through mass flow controllers and the mixed. The gas mixture contained 10 to 40% CO₂ at feed presures of 30 to 90 psig. The gas flow was humidified before entering the crossflow cell by passing it through a sainless-steel water bubbler. The feed pressure was regualted by a backpressure regulator attached tot the retentate port. The permeate flow rate at atmosperic pressure was measured using a Agilent 1100 flowmeter. The CO₂ concentration in the permeate was measured using a Landtec 5000 biogas analyzer. The relative humidity in the feed was estimated from measurements of the relative humidity in the retentate and the permeate at atmospheric pressure. Table 1 shows high CO₂ permeance and high selectivity over nitrogen or methane at a 30-psig feed pressure (40% CO₂) for the membrane of example 7. Table 2 shows high CO₂ permeance and high selectivity over nitrogen at various feed pressures for the membrane of example 8.

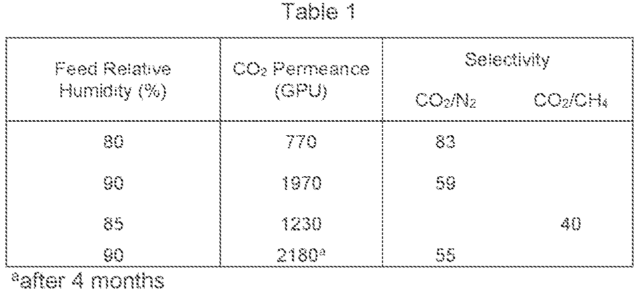

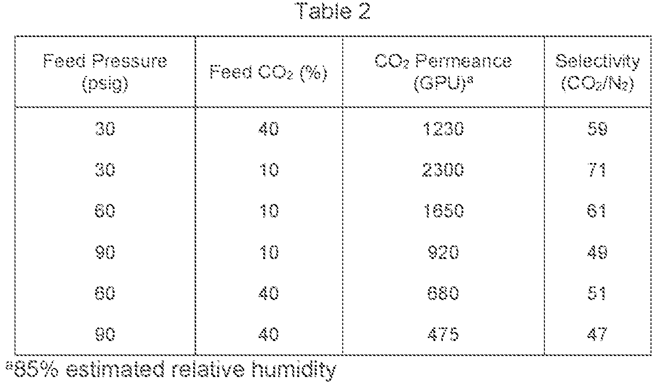

## Claims

1. A fluorinated copolymer comprising a first repeating unit, a second repeating unit, and having a backbone comprising a fluorinated and cyclic structure from the first repeating unit; the second repeating unit comprises a pendant amide functionality and has the following structure: 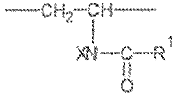 wherein X is H or an alkyl group; R¹ is H, an alkyl group, or an alkyl group that together with X form a cyclic ring with the proviso that X is not H.

2. The fluorinated copolymer of claim 1, wherein the first repeating unit is derived from a fluoromonomer selected from 4,5-difluoro-2,2-bis(trifluoromethyl)-1,3-dioxole or perfluoro(4-vinyloxyl-1-butene).

3. The fluorinated copolymer of claim 1, wherein the second repeating unit is derived from a vinyl amide comonomer selected from N-vinyl formamide or N-methyl-N-vinyl acetamide.

4. The fluorinated copolymer of claim 1, wherein the molar ratio of the first repeating unit to the second repeating unit is between 1:2 and 1:9.

5. The fluorinated copolymer of claim 1, wherein at least 50% of the pendant amide functionality in the second repeating unit is hydrolyzed and is a pendant amine functionality.

6. The fluorinated copolymer of claim 1 comprising an additional repeating unit from a comonomer selected from tetrafluoroethylene, chlorotrifluoroethylene, vinylidene fluoride, vinyl fluoride, perfluoropropylvinyl ether, or ethylene, and the additional repeating unit is preferably less than 50 mole percent with respect to the average repeating unit composition.

7. A membrane comprising the fluorinated copolymer of claim 5.

8. The membrane of claim 7, further comprising a porous-layer support which preferably comprises a material selected from polyvinylidine fluoride or polyacrylonitrile.

9. The membrane of claim 7, further comprising a gutter layer which preferably comprises a polymer material selected from Teflon^{®} AF 2400 or poly(5-trimethysilyl propyne).

10. The membrane of claim 7, wherein the carbon dioxide selectivity over nitrogen or methane is at least 20 and/or the carbon dioxide permeance is at least 500 GPU (1675 x 10⁻¹⁰ mol m⁻² s⁻¹ Pa⁻¹).

11. A process for separating carbon dioxide from a first gas mixture comprising nitrogen or methane; the process comprising: a) providing a membrane comprising the copolymer of claim 7, having a feed side and a permeate side; b) exposing the feed side to the first gas mixture that is flowing; c) providing a driving force; and d) producing a second gas mixture on the permeate side that has a higher concentration of carbon dioxide than the first gas mixture.

12. The process of claim 11, wherein the driving force is generated by providing a vacuum on the permeate-side.

13. The process of claim 11, wherein the carbon dioxide selectivity over nitrogen or methane is at least 20 and/or the carbon dioxide permeance is at least 500 GPU (1675 x 10⁻¹⁰ mol m⁻² s⁻¹ Pa⁻¹).

14. The process of claim 11, wherein the membrane comprises a porous-layer support which preferably comprises a material selected from polyvinylidine fluoride or polyacrylonitrile.

15. The process of claim 11, wherein the membrane comprises a gutter layer which preferably comprises a polymer material selected from Teflon^{®} AF 2400 or poly(5-trimethysilyl propyne).

## Patentansprüche

1. Fluoriertes Copolymer, umfassend eine erste Wiederholungseinheit, eine zweite Wiederholungseinheit, und mit einem Grundgerüst umfassend eine fluorierte und cyclische Struktur aus der ersten Wiederholungseinheit; die zweite Wiederholungseinheit umfassend eine anhängende Amidfunktionalität und aufweisend die folgende Struktur: 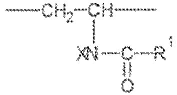 worin X ist H oder eine Alkylgruppe; R¹ ist H, eine Alkylgruppe oder eine Alkylgruppe, die zusammen mit X einen cyclischen Ring bildet, mit der Maßgabe, dass X nicht H ist.

2. Fluoriertes Copolymer gemäß Anspruch 1, wobei die erste Wiederholungseinheit von einem Fluormonomer, ausgewählt aus 4,5-Difluor-2,2-bis(trifluormethyl)-1,3-dioxol oder Perfluor(4-vinyloxyl-1-buten), abgeleitet ist.

3. Fluoriertes Copolymer gemäß Anspruch 1, wobei die zweite Wiederholungseinheit von einem Vinylamid-Comonomer, ausgewählt aus N-Vinylformamid oder N-Methyl-N-vinylacetamid, abgeleitet ist.

4. Fluoriertes Copolymer gemäß Anspruch 1, wobei das molare Verhältnis der ersten Wiederholungseinheit zur zweiten Wiederholungseinheit zwischen 1:2 und 1:9 liegt.

5. Fluoriertes Copolymer gemäß Anspruch 1, wobei mindestens 50% der anhängenden Amidfunktionalität in der zweiten Wiederholungseinheit hydrolysiert ist und eine anhängende Aminfunktionalität ist.

6. Fluoriertes Copolymer gemäß Anspruch 1, umfassend eine zusätzliche Wiederholungseinheit aus einem Comonomer ausgewählt aus Tetrafluorethylen, Chlortrifluorethylen, Vinylidenfluorid, Vinylfluorid, Perfluorpropylvinylether oder Ethylen, und
die zusätzliche Wiederholungseinheit beträgt vorzugsweise weniger als 50 Molprozent in Bezug auf die durchschnittliche Zusammensetzung der Wiederholungseinheit.

7. Membran, die das fluorierte Copolymer gemäß Anspruch 5 umfasst.

8. Membran gemäß Anspruch 7, ferner umfassend einen poröse-Schicht-Träger (a porous-layer support), der vorzugsweise umfasst ein Material, ausgewählt aus Polyvinylidenfluorid oder Polyacrylnitril.

9. Membran gemäß Anspruch 7, ferner umfassend eine Rinnenschicht, die vorzugsweise ein Polymermaterial umfasst, das aus Teflon^{®} AF 2400 oder Poly(5-Trimethysilylpropin) ausgewählt ist.

10. Membran gemäß Anspruch 7, wobei die Kohlendioxidselektivität gegenüber Stickstoff oder Methan mindestens 20 beträgt und/oder die Kohlendioxiddurchlässigkeit mindestens 500 GPU (1675 x 10⁻¹⁰ mol m⁻² s⁻¹ Pa⁻¹) beträgt.

11. Verfahren zur Abtrennung von Kohlendioxid aus einem ersten Gasgemisch, umfassend Stickstoff oder Methan; wobei das Verfahren umfasst: a) Bereitstellen einer Membran umfassend das Copolymer gemäß Anspruch 7, die eine Zufuhrseite und eine Permeatseite aufweist; b) Aussetzen der Zufuhrseite dem ersten Gasgemisch, das strömt; c) Bereitstellen einer Antriebskraft; und d) Erzeugen eines zweiten Gasgemischs auf der Permeatseite, das eine höhere Konzentration an Kohlendioxid aufweist als das erste Gasgemisch.

12. Verfahren gemäß Anspruch 11, wobei die Antriebskraft durch Bereitstellen eines Vakuums auf der Permeatseite erzeugt wird.

13. Verfahren gemäß Anspruch 11, wobei die Kohlendioxidselektivität gegenüber Stickstoff oder Methan mindestens 20 beträgt und/oder die Kohlendioxiddurchlässigkeit mindestens 500 GPU (1675 x 10⁻¹⁰ mol m⁻² s⁻¹ Pa⁻¹) beträgt.

14. Verfahren gemäß Anspruch 11, wobei die Membran einen poröse-Schicht-Träger umfasst, der vorzugsweise ein Material umfasst, das aus Polyvinylidinfluorid oder Polyacrylnitril ausgewählt ist.

15. Verfahren gemäß Anspruch 11, wobei die Membran umfasst eine Rinnenschicht, die vorzugsweise ein Polymermaterial umfasst, das aus Teflon^{®} AF 2400 oder Poly(5-Trimethysilylpropin) ausgewählt ist.

## Revendications

1. Copolymère fluoré comprenant un premier motif répété, un second motif répété, et présentant un squelette comprenant une structure fluorée et cyclique provenant du premier motif répété ; le second motif répété comprend une fonctionnalité amide pendante et présente la structure suivante : 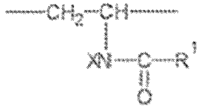 où X est H ou un groupe alkyle ; R¹ est H, un groupe alkyle, ou un groupe alkyle qui, avec X, forme un noyau cyclique à condition que X ne soit pas H.

2. Copolymère fluoré selon la revendication 1, dans lequel le premier motif répété est dérivé d'un fluoromonomère choisi parmi le 4,5-difluoro-2,2-bis (trifluorométhyl)-1,3-dioxole ou le perfluoro(4-vinyloxyl-1-butène).

3. Copolymère fluoré selon la revendication 1, dans lequel le second motif répété est dérivé d'un comonomère vinylamide choisi parmi le N-vinylformamide ou le N-méthyl-N-vinylacétamide.

4. Copolymère fluoré selon la revendication 1, dans lequel le rapport molaire du premier motif répété au second motif répété est compris entre 1:2 et 1:9.

5. Copolymère fluoré selon la revendication 1, dans lequel au moins 50 % de la fonctionnalité amide pendante dans le second motif répété est hydrolysée et constitue une fonctionnalité amine pendante.

6. Copolymère fluoré selon la revendication 1 comprenant un motif répété supplémentaire d'un comonomère choisi parmi le tétrafluoroéthylène, le chlorotrifluoroéthylène, le fluorure de vinylidène, le fluorure de vinyle, le perfluoropropylvinyl éther, ou l'éthylène, et le motif répété supplémentaire est préférablement inférieur à 50 pour cent molaire par rapport à la composition moyenne du motif répété.

7. Membrane comprenant le copolymère fluoré selon la revendication 5.

8. Membrane selon la revendication 7, comprenant en outre un support à couche poreuse qui comprend préférablement un matériau choisi parmi le fluorure de polyvinylidine ou le polyacrylonitrile.

9. Membrane selon la revendication 7, comprenant en outre une couche gouttière qui comprend préférablement un matériau polymère choisi parmi le Teflon^{®} AF 2400 ou le poly(5-triméthysilyl propyne).

10. Membrane selon la revendication 7, dans laquelle la sélectivité du dioxyde de carbone par rapport à l'azote ou au méthane est d'au moins 20 et/ou la perméance au dioxyde de carbone est d'au moins 500 GPU (1675 x 10⁻¹⁰ mol m⁻² s⁻¹ Pa⁻¹).

11. Procédé permettant de séparer le dioxyde de carbone d'un premier mélange gazeux comprenant de l'azote ou du méthane ; le procédé comprenant : a) la fourniture d'une membrane comprenant le copolymère de la revendication 7, présentant un côté alimentation et un côté perméat ; b) l'exposition du côté alimentation au premier mélange gazeux qui s'écoule ; c) la fourniture d'une force motrice ; et d) la production d'un second mélange gazeux du côté perméat qui présente une concentration de dioxyde de carbone plus élevée que le premier mélange gazeux.

12. Procédé selon la revendication 11, dans lequel la force motrice est générée par la fourniture d'un vide du côté perméat.

13. Procédé selon la revendication 11, dans lequel la sélectivité du dioxyde de carbone par rapport à l'azote ou au méthane est d'au moins 20 et/ou la perméance au dioxyde de carbone est d'au moins 500 GPU (1675 x 10⁻¹⁰ mol m⁻² s⁻¹ Pa⁻¹).

14. Procédé selon la revendication 11, dans lequel la membrane comprend un support à couche poreuse qui comprend préférablement un matériau choisi parmi le fluorure de polyvinylidine ou le polyacrylonitrile.

15. Procédé selon la revendication 11, dans lequel la membrane comprend une couche gouttière qui comprend préférablement un matériau polymère choisi parmi le Téflon^{®} AF 2400 ou le poly(5-trimethysilyl propyne).
